# EUROPÄISCHE PATENTANMELDUNG

(11) **EP 1 142 692 A1**
(43) Veröffentlichungstag der Anmeldung: **10.10.2001**
(21) Anmeldenummer: 01810231.9
(22) Anmeldetag: 07.03.2001
(51) Int. Cl.: B29C 70/08, C22C 49/00

(54) **Faserverbundwerkstoff**

(30) Priorität: 06.04.2000 EP 00810301
(71) Anmelder: Sulzer Markets and Technology AG, 8401 Winterthur (CH)
(72) Erfinder: Vodermayer, Albert Maria, Dr., 8305 Dietlikon (CH)
(74) Vertreter: Sulzer Management AG

(57) **Zusammenfassung**

Der Faserverbundwerkstoff enthält mindestens eine Faserkomponente (1) und mindestens zwei Matrixkomponenten (2, 3) unterschiedlicher Werkstoffklassen, die unterschiedliche thermomechanische Eigenschaften aufweisen. Bei einer Herstellung des Verbundwerkstoffs sind zwei Matrixkomponenten verflüssigbar und Faserfilamente (1) der Faserkomponente durch die verflüssigten Matrixkomponenten benetzbar. Dabei ist im verflüssigten Zustand die eine Matrixkomponente nicht in der anderen lösbar. Bei einer Konsolidierung des Verbundwerkstoffs ist eine der zuvor verflüssigten Matrixkomponenten (3) irreversibel zu einem Duroplasten aushärtbar, während die andere der zuvor verflüssigten Matrixkomponenten (2) aufschmelzbar bleibt.

## Beschreibung

Die Erfindung betrifft einen Faserverbundwerkstoff mit mindestens einer Faserkomponente und eine Verwendung des Faserverbundwerkstoffs.

Derartige Verbundwerkstoffe weisen Faserfilamente und eine Matrix aus vernetzenden oder nicht vernetzenden Kunststoffen auf.

Bei der Herstellung eines Verbundwerkstoffes mittels einer Druckimprägnierung werden die Faserfilamente in Form von Fasersträngen in einem Bad mit einer Dispersion aus Wasser und Polymerpartikeln getränkt, wobei mit den Partikeln das Material für eine thermoplastische Matrix zwischen die Faserfilamente eingebracht wird. Die Partikel verteilen sich in den Fasersträngen. Das von den Fasersträngen aufgenommene Wasser wird in einem Trocknungsverfahren verdampft. Nachfolgend werden die in den Fasersträngen verteilten Polymerpartikel aufgeschmolzen, wobei sich die Schmelze in den Fasersträngen gleichmässig verteilt. Eine maximale Benetzung erfolgt zwischen paarweise angeordneten Walzen, wobei gleichzeitig eine Abkühlung und ein Aushärten der Matrix stattfindet.

Bei diesem Werkstoff wird die geringe Druckfestigkeit in Faserrichtung und die schlechtere Verklebbarkeit mit anderen Werkstoffen als nachteilig angesehen.

Der Erfindung liegt die Aufgabe zugrunde, einen Verbundwerkstoff bezüglich den genannten Nachteilen zu verbessern. Diese Aufgabe wird erfindungsgmäss mit den Merkmalen des Anspruches 1 gelöst.

Der Faserverbundwerkstoff enthält mindestens eine Faserkomponente und mindestens zwei Matrixkomponenten unterschiedlicher Werkstoffklassen, die unterschiedliche thermomechanische Eigenschaften aufweisen. Bei einer Herstellung des Verbundwerkstoffs sind zwei Matrixkomponenten verflüssigbar und Faserfilamente der Faserkomponente durch die verflüssigten Matrixkomponenten benetzbar. Dabei ist im verflüssigten Zustand die eine Matrixkomponente nicht in der anderen lösbar. Bei einer Konsolidierung des Verbundwerkstoffs ist eine der zuvor verflüssigten Matrixkomponenten irreversibel zu einem Duroplasten aushärtbar, während die andere der zuvor verflüssigten Matrixkomponenten aufschmelzbar bleibt.

Die abhängigen Ansprüche 2 bis 8 betreffen vorteilhafte Ausführungsformen des erfindungsgemässen Faserverbundwerkstoff. Verwendungen des erfindungsgemässen Faserverbundwerkstoff sind Gegenstand der Ansprüche 9 und 10.

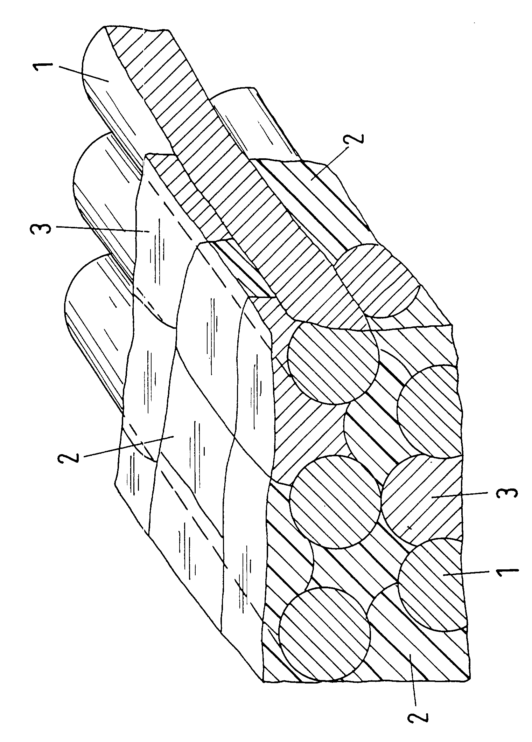

Nachfolgend wird die Erfindung anhand der beiliegenden Figur erläutert. Die einzige Figur zeigt einen Abschnitt einer Ausführungsform eines erfindungsgemässen Faserverbundwerkstoffes in räumlicher Darstellung.

Der Faserverbundwerkstoff wird auf der Grundlage des oben beschriebenen Herstellungsverfahren aus Fasersträngen, die aus Faserfilamenten 1 bestehen, sowie Partikeln aus einem Thermoplast 2 und einem Duroplast 3 hergestellt. Bei einer bevorzugten Ausführung wird Fasermaterial aus Kohlenstoff, Partikeln aus Polyamid und Partikeln aus warmhärtendem Epoxyharz verwendet. Die Faserstränge werden in einem Bad mit den Partikeln aus Polyamid und Epoxyharz imprägniert, wobei der Anteil des Epoxyharz bezogen auf den Kunststoffanteil im Bereich von 3 bis 30 Vol% liegen kann. Bei der Imprägnierung können die Partikel aus Polyamid und Epoxyharz auch getrennt von einander in die Faserstränge eingearbeitet werden. Es ist von Vorteil, wenn ein Tensid zur Herabsetzung der Oberflächenspannug des Wassers verwendet wird. Nach der Verdampfung des Wassers erfolgt in einem nachgeschalteten Ofen die Verbindung der drei Komponenten. Durch die Erwärmung werden die Partikel aus Polyamid und Epoxyharz aufgeschmolzen; die Schmelzen breiten sich durch die Kapillarwirkung in den Fasersträngen aus und benetzen die Faserfilamente 1. Das Epoxyharz härtet aus während das Polyamid für die Konsolidierung weich bleibt. Bei der Konsolidierung wird das Polyamid durch Abkühlen verfestigt.

Wie die Figur zeigt, wird ein Körper erzeugt, bei dem die Thermoplastpartikel 2 und Duroplastpartikel 3 untereinander und mit den Faserfilamenten 1 verbunden sind; an der Oberfläche des Körpers befinden sich Bereiche, die aus Thermoplast und Duroplast bestehen. Aufgrund der Bereiche aus Duroplast kann der Körper mittels Kleben mit anderen Körpern verbunden werden. Aufgrund der Tatsache, dass der Duroplast auch die Fasern benetzt und einen höheren Elastizitätsmodul als der Thermoplast (beispielsweise Polyamid) hat, wird eine höhere Druckfestigkeit in Faserrichtung erreicht.

Es ist auch möglich nach dem Aufschmelzen die flüssige Form der Matrixkomponenten beizubehalten, diese zu verpressen und die flüssigen Matrixkomponenten abzukühlen und mindestens eine oder beide zu verfestigen.

Bei einer zweiten Ausführungsform des Faserverbundwerkstoffes werden neben den Fasersträngen, eine erste Matrixkomponente aus Thermoplast, z.B. Polyimid und eine zweite Matrixkomponente aus Metall, z.B. Aluminiumlegierungen verwendet. Mit Vorteil hat die metallische Legierung einen niedrigen Schmelzpunkt, so dass sie bei der Herstellung des Verbundwerkstoffs sowie einer späteren Umformung aufschmelzbar ist.

Der erfindungsgemässe Verbundwerkstoff kann auch mindestens drei Matrixkomponenten enthalten, wobei die erste Matrixkomponente ein Thermoplast, die zweite Matrixkomponente ein Duroplast und die dritte ein Metall oder ein anderes anorganisches Material ist.

Die Faserkomponenten des erfindungsgemässen Verbundwerkstoffes können in Form eines Gewebes oder Geflechts aus Fasersträngen vorliegen. Ein solcher Verbundwerkstoff kann semiflexibel ausgebildet sein. Eine Semiflexibilität liegt vor, wenn die in einer vorgegebenen Richtung sich erstreckenden Faserstränge einen relativ kleinen Anteil an Matrixkomponenten aufweisen und dieser Anteil so klein ist, dass der Verbundwerkstoff bei Umgebungstemperatur in der genannten Richtung relativ leicht biegbar ist.

Der Verbundwerkstoff lässt sich dazu verwenden, die Oberfläche eines Körpers durch Aufkleben zu verstärkten. Dabei wird zum Aufkleben ein Klebstoff verwendet, der mit einer der Matrixkomponenten, insbesondere einem Duroplasten, eine wesentlich festere Verbindung als mit einer anderen Matrixkomponente, insbesondere einem Thermoplast, eingeht. Der Verbundwerkstoff kann vor dem Aufkleben durch thermoplastisches Verformen in eine Form gebracht werden, die auf die Oberfläche des Körpers passt.

## Patentansprüche

1. Faserverbundwerkstoff mit mindestens einer Faserkomponente (1) und mindestens zwei Matrixkomponenten (2, 3) unterschiedlicher Werkstoffklassen, die unterschiedliche thermomechanische Eigenschaften aufweisen,
**dadurch gekennzeichnet, dass** bei einer Herstellung des Verbundwerkstoffs zwei Matrixkomponenten (2, 3) verflüssigbar und Faserfilamente (1) der Faserkomponente durch die verflüssigten Matrixkomponenten benetzbar sind, **dass** im verflüssigten Zustand die eine Matrixkomponente nicht in der anderen lösbar ist und **dass** bei einer Konsolidierung des Verbundwerkstoffs eine der zuvor verflüssigten Matrixkomponenten (3) irreversibel zu einem Duroplast aushärtbar ist, während die andere der zuvor verflüssigten Matrixkomponenten aufschmelzbar bleibt.

2. Verbundwerkstoff nach Anspruch 1, **dadurch gekennzeichnet, dass** die Faserkomponente in Form eines endlosen Verstärkungsstrangs von Faserfilamenten (1) vorliegt und **dass** die Matrixkomponenten (2, 3) mit der Faserkomponente mittels einer Druckimprägnierung verbunden sind.

3. Verbundwerkstoff nach Anspruch 1 oder 2, **dadurch gekennzeichnet, dass** die eine Matrixkomponente (2) ein Thermoplast ist.

4. Verbundwerkstoff nach einem der Ansprüche 1 bis 3, **dadurch gekennzeichnet, dass** der Anteil an Duroplast bezogen auf den gesamten Anteil der Matrixkomponenten im Bereich von 3 bis 30 Vol% liegt.

5. Verbundwerkstoff nach einem der Ansprüche 1 bis 4, **dadurch gekennzeichnet, dass** sie eine Matrixkomponente aus einer metallischen Legierung enthält, die bei der Herstellung des Verbundwerkstoffs sowie einer späteren Umformung aufschmelzbar ist.

6. Verbundwerkstoff nach einem der Ansprüche 1 bis 5, **gekennzeichnet durch** drei Matrixkomponenten, wobei die erste Matrixkomponente (2) ein Thermoplast, die zweite Matrixkomponente (3) ein Duroplast und die dritte ein Metall oder ein anderes anorganisches Material ist.

7. Verbundwerkstoff nach einem der Ansprüche 1 bis 6, **dadurch gekennzeichnet, dass** die Faserkomponente (1) in Form eines Gewebes oder Geflechts aus Fasersträngen vorliegt.

8. Verbundwerkstoff nach Anspruch 7, **gekennzeichnet durch** eine Semiflexibilität, wobei die in einer vorgegebenen Richtung sich erstreckenden Faserstränge (1) einen relativ kleinen Anteil an Matrixkomponenten (2, 3) aufweisen, der so klein ist, dass der Verbundwerkstoff bei Umgebungstemperatur in der genannten Richtung relativ leicht biegbar ist.

9. Verwendung eines Verbundwerkstoffs gemäss einem der Ansprüche 1 bis 8, **dadurch gekennzeichnet, dass** mit dem Verbundwerkstoff die Oberfläche eines Körpers durch Aufkleben verstärkt wird, wobei ein zum Aufkleben verwendeter Klebstoff mit einer der Matrixkomponenten (3), insbesondere mit dem Duroplast, eine wesentlich festere Verbindung als mit einer anderen Matrixkomponente (2), insbesondere einem Thermoplast, eingeht.

10. Verwendung nach Anspruch 9, **dadurch gekennzeichnet, dass** der Verbundwerkstoff vor dem Aufkleben durch thermoplastisches Verformen in eine Form gebracht wird, die auf die Oberfläche des Körpers passt.
